**Europäisches Patentamt**

**European Patent Office**

**Office européen des brevets**

(19)

(11) Numéro de publication: **0 023 851**
**B1**

(12)　　　　　　　　　　**FASCICULE DE BREVET EUROPEEN**

(45) Date de publication du fascicule du brevet:
**01.12.82**

(51) Int. Cl.³: **B 60 Q 1/06**

(21) Numéro de dépôt: **80401019.7**

(22) Date de dépôt: **04.07.80**

(54) Dispositif de visualisation de la position de projecteurs de véhicules automobiles.

(30) Priorité: **01.08.79 FR 7919765**

(43) Date de publication de la demande:
**11.02.81 Bulletin 81/6**

(45) Mention de la délivrance du brevet:
**01.12.82 Bulletin 82/48**

(84) Etats contractants désignés:
**DE GB IT**

(56) Documents cités:
**DE-C-973 148**

(73) Titulaire: **DUCELLIER & Cie, Echat 950, F-94024 Créteil Cedex (FR)**

(72) Inventeur: **Mauroy, Bernard, 16 Rue des Tulipes, F-77420 Champs s/Marne (FR)**

(74) Mandataire: **Habert, Roger, c/o Ducellier & Cie 2, rue Boulle Echat 950, F-94024 Créteil Cedex (FR)**

## Dispositif de visualisation de la position de projecteurs de véhicules automobiles

La présente invention concerne un dispositif de visualisation de la position des projecteurs équipés d'un correcteur de charge à commande manuelle, pour véhicule automobile.

Les véhicules équipés de tels correcteurs de charge à commande manuelle ne sont pas munis d'un système de visualisation de la position desdits projecteurs et de ce fait l'utilisateur est toujours dans le doute quant à la position exacte des projecteurs et plus particulièrement lorsque l'amplitude maximum du basculement des projecteurs est obtenue après que le bouton de commande du correcteur de charge ait effectué plusieurs tours.

Une solution qui vient rapidement à l'esprit de l'homme de l'art est d'utiliser un train d'engrenages dans lequel la roue dentée menante est portée par le bouton de commande, et la roue dentée menée porte les graduations, or lorsque le bouton de commande doit effectuer plusieurs tours la roue dentée menée doit être de grand diamètre et conséquemment avoir un encombrement trop important.

Il est connu, selon le brevet DE-C-973 148, afin de limiter la dimension d'une roue graduée de la relier à une roue dentée entraînée par un pignon denté solidaire d'une croix de Malte entraînée en rotation par un doigt rendu solidaire de l'arbre d'entraînement par un couple de plateaux. Il y a donc entre l'arbre d'entraînement et la roue graduée un entraînement intermédiaire qui bien qu'apportant un résultat appréciable nécessite l'emploi d'une pluralité d'éléments constitutifs de forme compliquée qui de plus n'assurent pas l'immobilisation de l'arbre d'entraînement lorsqu'il n'est pas sollicité soit manuellement, soit par certaines vibrations.

La présente invention a pour but de remédier à de tels inconvénients et concerne à cet effet un dispositif de visualisation de la position des projecteurs équipés d'un correcteur de charge à commande manuelle, pour véhicules automobiles, comportant un bouton de commande disposé à proximité de l'utilisateur et solidaire d'un arbre rotatif qui transmet, lors de sa rotation, un effort nécessaire au basculement des projecteurs, dispositif de visualisation caractérisé en ce que sur l'arbre rotatif est montée une bague qui comporte, sur sa périphérie au moins une dent radiale qui coopère avec les extrémités libres de palettes radiales, déformables élastiquement, d'un ensemble rotatif gradué monté à côté et orienté sensiblement tangentiellement à l'arbre rotatif de façon à ce qu'au repos une dent de la bague s'immobilise entre deux palettes et immobilise l'ensemble rotatif.

La description qui va suivre, en regard des schémas annexés, fera mieux comprendre comment l'invention peut être réalisée.

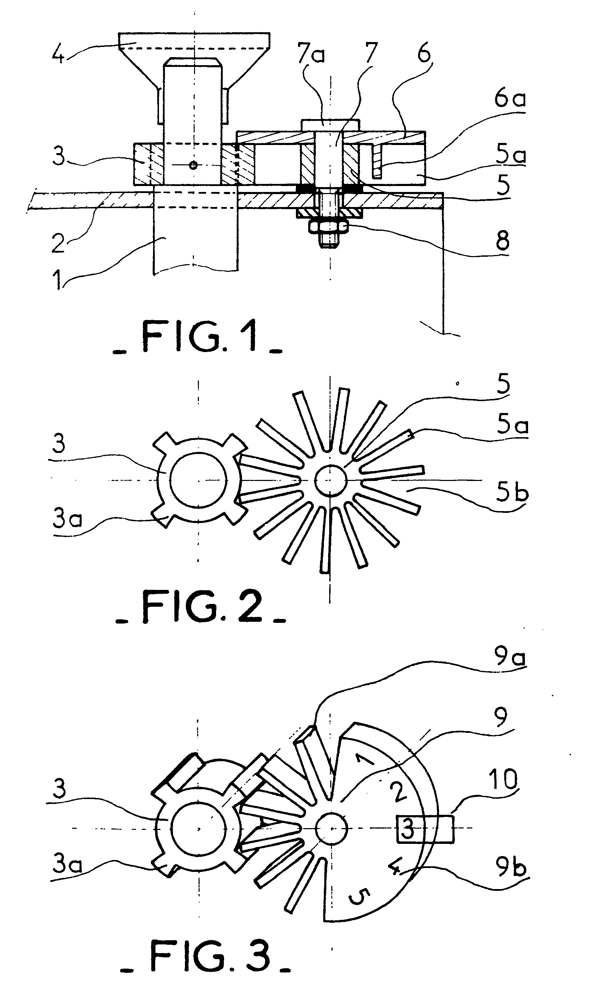

La fig. 1 représente en coupe un dispositif selon l'invention.

La fig. 2 représente la liaison entre l'élément d'entraînement et l'élément entraîné.

La fig. 3 représente une variante du dispositif selon l'invention.

Afin d'être à proximité de l'utilisateur le dispositif de visualisation est fixé sur le tableau de bord 2. Le bouton de commande manuelle 4 est relié au correcteur de charge par l'intermédiaire d'un arbre 1.

Conformément à l'invention une bague d'entraînement 3 est fixée solidaire de l'arbre 1 et conséquemment du bouton de commande 4. Une roue 5 à palettes 5a est montée libre en rotation autour d'un axe 7 sur le tableau de bord 2 de façon à être sensiblement tangentielle à la bague d'entraînement 3. Sur cette roue à palettes est immobilisée une plaquette graduée 6 qui comporte par exemple un doigt 6a apte à s'encastrer dans un des espaces 5b définis entre les palettes 5a.

Cette plaquette 6 et la roue à palettes 5 sont maintenues sur le tableau de bord à l'aide d'un système de fixation connu 8.

Avec un tel dispositif l'utilisateur connaissant approximativement la charge de son véhicule, tourne le bouton 4 qui entraîne en rotation l'arbre 1 et conséquemment la bague d'entraînement 3 laquelle bague 3 à l'aide de dents périphériques 3a agit sur les palettes 5a de la roue à palettes 5 de façon telle à faire tourner l'ensemble roue 5 et plaquette 6, et ceci jusqu'à ce que la graduation de la plaquette 6 choisie en fonction de la charge du véhicule se trouve face à un repère fixe.

La roue à palettes 5 est réalisée en une matière déformable élastiquement, tel que de la résine acétal par exemple, de façon à ce que lorsque les palettes 5a sont entraînées par les dents 3a de la bague d'entraînement elles puissent se déformer, puis reprendre leur forme initiale, lors de leur passage dans le plan comprenant les axes de révolution de la roue à palettes 5 et de la bague d'entraînement 3. L'ensemble roue à palettes 5 et bague d'entraînement 3 étant alors bloqué dans la position choisie par la résistance des palettes 5b qui ne se déforment que sous un effort suffisant.

Le nombre des dents 3a et des palettes 5a peut varier suivant le nombre de tours demandés au bouton de commande 4 pour un débattement complet du basculement des projecteurs.

Dans une variante de réalisation suivant la fig. 3 la bague d'entraînement 3 agit sur une roue 9 laquelle comporte une partie à ailettes 9a similaires aux ailettes 5a, et d'autre part une portion de disque gradué 9b dont les graduations sont visibles à travers une lucarne 10 réalisée dans le tableau de bord 2.

Il est bien entendu que des modifications pourront être apportées à une telle réalisation sans sortir pour cela du cadre de l'invention, par exemple les graduations pourront être indiquées directement sur la tranche visible des ailettes 5a ou 9a, réduisant ainsi soit le nombre d'éléments composants un tel dispositif, soit son encombrement. Il pourra aussi n'y avoir qu'une dent radiale 3a de dimensions telles que lors de l'immobilisation du dispositif, elle soit immobilisée entre deux palettes 5a.

## Revendications

1. Dispositif de visualisation de la position des projecteurs équipés d'un correcteur de charge à commande manuelle, pour véhicules automobiles comportant un bouton de commande (4) disposé à proximité de l'utilisateur et solidaire d'un arbre rotatif (1) qui transmet, lors de sa rotation, un effort nécessaire au basculement des projecteurs, dispositif de visualisation caractérisé en ce que sur l'arbre rotatif (1) est montée une bague (3) qui comporte, sur sa périphérie au moins une dent radiale (3a) qui coopère avec les extrémités libres de palettes radiales (5a ou 9a), déformables élastiquement, d'un ensemble rotatif gradué (5–6 ou 9), monté à côté et orienté sensiblement tangentiellement à l'arbre rotatif de façon à ce qu'au repos, une dent de la bague s'immobilise entre deux palettes et immobilise l'ensemble rotatif.

2. Dispositif de visualisation selon la revendication 1, caractérisé en ce que l'arbre rotatif (1) comporte au moins deux dents radiales (3a) disposées de façon telle qu'au repos elles emprisonnent deux palettes radiales (5a ou 9a), afin d'assurer le blocage de l'ensemble du mécanisme.

3. Dispositif de visualisation selon la revendication 1, caractérisé en ce que l'ensemble rotatif gradué comporte autour de son axe de rotation un secteur (9) constitué de palettes radiales (9a), et un secteur plein (9b) sur lequel sont indiquées les graduations.

4. Dispositif de visualisation selon la revendication 1, caractérisé en ce que l'ensemble rotatif gradué (9) comporte au moins un secteur constitué de palettes radiales (9a) sur lesquelles sont indiquées directement les graduations.

## Claims

1. A device for providing a visual indication of the position of headlamps equipped with a manually controlled load corrector, for motor vehicles, including a control knob (4) located close to the user and fast with a rotary shaft (1) which, when it is rotated, transmits a force necessary to tilt the headlamps, the visual indication device being characterised in that a ring (3) is mounted on the rotary shaft (1) and has on its periphery at least one radial tooth (3a) which co-operates with the free ends of resiliently deformable radial vanes (5a or 9a) of a graduated rotary assembly (5–6 or 9) mounted at the side of an oriented substantially tangentially relative to the rotary shaft in such a manner that, at rest, a tooth of the ring is immobilised between two vanes and immobilises the rotary assembly.

2. A visual indication device according to Claim 1, characterised in that the rotary shaft (1) includes at least two radial teeth (3a) disposed in such a manner that they confine two radial vanes (5a or 9a) in order to ensure locking of the assembly of the mechanism.

3. A visual indication device according to Claim 1, characterised in that the graduated rotary assembly includes around its rotational axis a sector (9) constituted by radial vanes (9a) and a solid sector (9b) on which the graduations are marked.

4. A visual indication device according to Claim 1, characterised in that the graduated rotary assembly (9) includes at least one sector constituted by radial vanes (9a) on which the graduations are indicated directly.

## Patentansprüche

1. Vorrichtung zur Anzeige der Stellung von Kraftfahrzeug-Scheinwerfern, die zur Korrektur ihrer Stellung in Abhängigkeit der Belastung des Kraftfahrzeuges mit einer manuell betätigbaren Korrekturvorrichtung versehen sind, umfassend einen Betätigungsknopf (4), der nahe dem Benutzer angeordnet und mit einer Welle (1) verbunden ist, die bei ihrer Drehung die zum Verschwenken der Scheinwerfer erforderliche Kraft überträgt, dadurch gekennzeichnet, dass auf der Welle (1) ein Ring (3) angeordnet ist, der an seinem Umfang mindestens einen Radialzahn (3a) trägt, der mit den freien Enden von elastisch verformbaren Radialflügeln (5a oder 9a) einer mit einer Skaleneinteilung versehenen Drehanordnung (5–6 oder 9) zusammenwirkt, die neben der Welle (1) derart angeordnet und tangential zu dieser ausgerichtet ist, dass in der Ruhestellung ein Radialzahn des Ringes zwischen zwei Flügeln ruht und die Drehanordnung immobilisiert.

2. Vorrichtung nach Anspruch 1, dadurch gekennzeichnet, dass die Welle (1) mindestens zwei Radialzähne (3a) aufweist, die derart angeordnet sind, dass sie in der Ruhestellung zwei Radialflügel (5a oder 9a) einschliessen, um die Blockierung des ganzen Mechanismus zu gewährleisten.

3. Vorrichtung nach Anspruch 1, dadurch gekennzeichnet, dass die mit einer Skaleneinteilung versehene Drehanordnung um ihre Drehachse einen von den Radialflügeln (9a) gebildeten Sektor (9) und einen aus vollem Material bestehenden Sektor (9b) aufweist, auf dem die Skaleneinteilung aufgebracht ist.

4. Vorrichtung nach Anspruch 1, dadurch gekennzeichnet, dass die mit einer Skaleneinteilung versehene Drehanordnung (9) mindestens einen von dem Radialflügel (9a) gebildeten Sektor aufweist und dass die Skaleneinteilung direkt auf den Radialflügeln aufgebracht ist.

_ FIG. 1 _

_ FIG. 2 _

_ FIG. 3 _